# EUROPÄISCHE PATENTSCHRIFT

(11) **EP 1 826 433 B1**
(45) Veröffentlichungstag und Bekanntmachung des Hinweises auf die Patenterteilung: **15.07.2009**
(21) Anmeldenummer: 07001621.7
(22) Anmeldetag: 25.01.2007
(51) Int. Cl.: F16D 25/10, F16D 25/08

(54) **Doppelkupplungsanordnung für ein Doppelkupplungsgetriebe**
Double gear assembly for a double gear transmission
Dispositif à double embrayage pour un engrenage à double embrayage

(30) Priorität: 28.02.2006 DE 102006010113
(43) Veröffentlichungstag der Anmeldung: 29.08.2007
(73) Patentinhaber: GETRAG Getriebe- und Zahnradfabrik Hermann Hagenmeyer GmbH & Cie KG, 74199 Untergruppenbach (DE)
(72) Erfinder: Gremplini, Hansi, 71691 Freiberg (DE); Fronius, Kuno, 74348 Lauffen (DE)
(74) Vertreter: Steil, Christian

(56) Entgegenhaltungen:
- EP-A1- 1 195 537
- WO-A-03/027525
- DE-A1-2102005 025 77
- FR-A1- 2 851 627
- GB-A- 2 369 416

## Beschreibung

Die vorliegende Erfindung betrifft eine Doppelkupplungsanordnung für ein Doppelkupplungsgetriebe, mit einer Eingangswelle, einer ersten Reibkupplung, einer zweiten Reibkupplung, zwei Ausgangswellen, einem drehfesten Gehäuse, einer gehäusefesten Nabe, einer ersten gehäusefesten Kolben/Zylinderanordnung und einer zweiten gehäusefesten Kolben/Zylinderanordnung, wobei Eingangsglieder der Reibkupplungen mit der Eingangswelle verbunden sind, wobei Ausgangsglieder der Reibkupplungen jeweils mit einer der zwei Ausgangswellen verbunden sind, und wobei die Reibkupplungen jeweils mittels einer der gehäusefesten Kolben/Zylinderanordnungen und eines Axiallagers betätigbar sind, wobei wenigstens eines der Eingangsglieder mittels einer Radiallageranordnung an der gehäusefesten Nabe drehbar gelagert ist, und wobei wenigstens eines der Eingangsglieder mit einem Drehglied verbunden ist, das mittels der Radiallageranordnung an der gehäusefesten Nabe drehbar gelagert ist.

Eine derartige Doppelkupplungsanordnung ist aus dem Dokument DE 10 2004 061 020 A1 bekannt.

Doppelkupplungsgetriebe weisen eine Doppelkupplungsanordnung sowie zwei Teilgetriebe auf. Die Teilgetriebe sind in der Regel in Vorgelegebauweise ausgeführt. Eines der Teilgetriebe ist dabei den geraden Gangstufen zugeordnet, das andere Teilgetriebe den ungeraden Gangstufen.

Durch überschneidende Betätigung der zwei Kupplungen der Doppelkupplungsanordnung kann ein Gangwechsel ohne Zugkraftunterbrechung durchgeführt werden.

Diese Art von Doppelkupplungsgetriebe eignet sich für Kraftfahrzeuge, insbesondere für Personenkraftwagen.

Bei den Doppelkupplungsanordnungen werden heutzutage in der Regel fluidisch betriebene (nasse) Reibkupplungen verwendet, beispielsweise nass laufende Lamellenkupplungen.

Aus dem Dokument DE 10 2004 013 265 A1 ist eine Doppelkupplungsanordnung bekannt, bei der den zwei Reibkupplungen jeweils ein mitlaufender Betätigungskolben zugeordnet ist, und wobei die Betätigungskolben eine einem druckbeaufschlagbaren Kolbenraum zugewandte erste radiale Wirkfläche und eine einem Fliehkraftdruckausgleichsraum zugewandte zweite radiale Wirkfläche aufweisen. Die Zufuhr von Fluid zu den Kolbenräumen erfolgt über eine mitdrehende Nabe und eine zwischen dieser Nabe und dem Gehäuse angeordneten Drehdurchführung.

Nachteilig bei dieser Art von Doppelkupplungsanordnung ist die Tatsache, dass die Komplexität relativ groß ist und sich hohe Schleppmomente ergeben.

Eine vergleichbare Doppelkupplungsanordnung ist aus dem Dokument DE 102 23 780 C1 bekannt.

Aus der eingangs genannten DE 10 2004 061 020 A1 ist es bekannt, an einer gehäusefesten Nabe zwei radial ineinander verschachtelte, in die gleiche Richtung wirkende Kolben/Zylinderanordnungen gehäusefest vorzusehen. Die Kolben/Zylinderanordnungen wirken über Hebelanordnungen auf die ebenfalls radial ineinander geschachtelten Reibkupplungen der Doppelkupplungsanordnung.

Ein Eingangsglied der radial äußeren Reibkupplung ist an einem Abschnitt der ersten Ausgangswelle (innere Ausgangswelle) drehbar gelagert, der sich in Richtung hin zu der Kurbelwelle erstreckt.

Aus FR 2 851 627 ist eine Momentübertragungsvorrichtung für ein Kraftfahrzeug bekannt, die eine Kupplung aufweist, die zwischen einer Kurbelwelle und einer Antriebswelle montiert ist. Eine Kupplungsbetätigungseinheit weist einen hydraulischen Hebel auf, der gesteuert wird durch Druck einer hydraulischen Flüssigkeit. Eine kreisförmige Trennwand kompensiert den Druck, der auf die Betätigungseinheit wirkt, um der Betätigung der Kupplung von einer Ruheposition aus entgegenzuwirken, wenn der Druck, der den Hebel steuert, geringer ist als ein vorbestimmter Schwellwert.

Es ist vor dem obigen Hintergrund die Aufgabe der vorliegenden Erfindung, eine verbesserte Doppelkupplungsanordnung für ein Doppelkupplungsgetriebe anzugeben.

Diese Aufgabe wird bei der eingangs genannten Doppelkupplungsanordnung dadurch gelöst, dass die erste und die zweite Kolben/Zylinderanordnung auf gegenüberliegenden Seiten der Radiallageranordnung angeordnet sind.

Die Lagerung des wenigstens einen Eingangsgliedes kann dabei unmittelbar oder mittelbar erfolgen.

Insgesamt kann so eine weitgehend symmetrische Anordnung erzielt werden, bei der die auftretenden Kräfte günstig geführt bzw. aufgenommen werden können.

Das Drehglied kann einstückig mit dem wenigstens einen Eingangsglied verbunden sein, oder es kann als separates Teil ausgebildet sein.

Ferner ist es vorteilhaft, wenn die Radiallageranordnung zwei axial voneinander beabstandete Radiallager aufweist.

Bei dieser Anordnung ist es möglich, in der Radiallageranordnung auch axiale Kräfte aufzunehmen, so dass das wenigstens eine Eingangsglied bzw. Drehglied axial auf günstige Weise fixiert werden kann.

Gemäß einer weiteren Ausführungsform ist es hierbei vorgesehen, dass die Radiallager abgedichtet sind, wobei ein Raum dazwischen zur Führung von Kühlfluid dient.

Bei dieser Ausführungsform ist es auf konstruktiv besonders günstige Weise möglich, über die Radiallageranordnung den Reibkupplungen Kühlfluid zuzuführen.

Auch zur Zuführung von Kühlfluid ist vorzugsweise keine Drehdurchführung oder Ähnliches notwendig. Zudem ist es so, dass über die gehäusefeste Nabe das Kühlfluid von radial innen zugeführt werden kann und dann über das Drehglied bzw. das Eingangsglied und die auf dieses wirkenden Zentrifugalkräfte in optimaler Weise den Reibkupplungen zugeführt werden kann.

Aus ähnlichen Gründen ist es auch vorteilhaft, wenn die erste und die zweite Kolben/Zylinderanordnung in entgegengesetzte Richtungen wirken.

Die Ausführungsform einer Doppelkupplungsanordnung mit gehäusefesten Kolben/Zylinderanordnungen, die in entgegengesetzte Richtungen wirken, wird auch unabhängig von der Lagerung der Eingangsglieder als eigene Erfindung angesehen, also insbesondere unabhängig davon, ob wenigstens eines der Eingangsglieder mittels einer Radiallageranordnung an der gehäusefesten Nabe drehbar gelagert ist.

Die Wirkung in entgegengesetzte Richtung bietet eine Vielzahl von Vorteilen betreffend den symmetrischen Aufbau und die erreichbare Modularität (es können beispielsweise im Wesentlichen identische bzw. spiegelbildlich angeordnete Kolben/Zylinderanordnungen verwendet werden).

Insgesamt ist es vorteilhaft, wenn die Kolben/Zylinderanordnungen unmittelbar am Außenumfang der gehäusefesten Nabe gelagert sind.

Die Nabe, die sich vorzugsweise radial innerhalb der Reibkupplungen erstreckt, kann an ihrem Außenumfang die Kolben/Zylinderanordnungen tragen. Ferner ist es hierbei vorteilhaft, dass die Axiallager mit relativ geringem Radius ausgebildet werden können.

Gemäß einer weiteren bevorzugten Ausführungsform sind die Reibkupplungen jeweils durch eine Federanordnung in Öffnungsrichtung vorgespannt.

Hierbei dienen die Axiallager folglich als Einrücklager, da über die Axiallager die entsprechende Kraft zum Schließen (Einrücken) der Reibkupplungen aufgebracht wird.

Dabei ist es von besonderem Vorteil, wenn wenigstens eine der Federanordnungen sich an einem Drehglied abstützt, das mittels der Radiallageranordnung an der gehäusefesten Nabe drehbar gelagert ist.

Hierdurch verringert sich der Bauteilaufwand weiter, da die Abstützung an einem in der Regel ohnehin vorhandenen Bauglied vorgenommen werden kann.

Bei der Ausführung mit zwei Kolben/Zylinderanordnungen auf gegenüberliegenden Seiten und mit entgegengesetzten Wirkrichtungen können sich vorzugsweise beide Federanordnungen an dem Drehglied abstützen (von entgegengesetzten Seiten).

Gemäß einer weiteren bevorzugten Ausführungsform ist die zweite Reibkupplung radial innerhalb der ersten Reibkupplung angeordnet. Dies ermöglicht eine axial kurze Bauweise.

Dabei ist es von Vorteil, wenn das Eingangsglied der ersten Reibkupplung einen radial außen angeordneten Lamellenträger aufweist.

Ferner ist es vorteilhaft, wenn das Eingangsglied der zweiten Reibkupplung einen radial innen angeordneten Lamellenträger aufweist.

Bei einer alternativen Ausführungsform ist die zweite Reibkupplung axial benachbart zu der ersten Reibkupplung angeordnet.

Hierdurch lässt sich eine radial kompakte Bauweise erzielen.

Dabei ist es von besonderem Vorteil, wenn das Eingangsglied der ersten Reibkupplung einen radial innen angeordneten Lamellenträger aufweist.

Dies ermöglicht eine günstige Anbindung an die Radiallageranordnung.

Daher ist es auch vorteilhaft, wenn das Eingangsglied der zweiten Reibkupplung einen radial innen angeordneten Lamellenträger aufweist.

Insgesamt ist es bei dieser alternativen Ausführungsform bevorzugt, wenn ein mittels der Radiallageranordnung an der Nabe gelagertes Drehglied mit einem gemeinsamen Eingangsglied der ersten und der zweiten Reibkupplung verbunden ist.

Hierdurch lässt sich der Bauteilaufwand weiter verringern.

Insgesamt wird mit der erfindungsgemäßen Doppelkupplungsanordnung wenigstens einer der folgenden Vorteile erzielt:
- Es ergibt sich eine geringere Komplexität der Bauteile.
- Die Herstellkosten sind geringer.
- Es ergeben sich geringere Schleppmomente.
- Es sind keine Fliehkraftausgleichsräume notwendig, da keine drehenden Kolben vorgesehen sind.
- Eine Drehdurchführung ist nicht notwendig, so dass auch undefinierte Leckagen entfallen.
- Die Aktuatorik der Doppelkupplungsanordnung kann modular aufgebaut werden.
- Die gleiche Aktuatorik kann für verschiedene Doppelkupplungsanordnungen verwendet werden, insbesondere nicht nur für Doppelkupplungsanordnungen mit nass laufenden Reibkupplungen, sondern auch für Doppelkupplungsanordnungen für trocken laufende Reibkupplungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges für ein Kraftfahrzeug mit einer Doppelkupplungsanordnung gemäß einer Ausführungsform der vorliegenden Erfindung; und
- Fig. 2: eine schematische Ansicht einer Doppelkupplungsanordnung gemäß einer weiteren Ausführungsform der vorliegenden Erfindung.

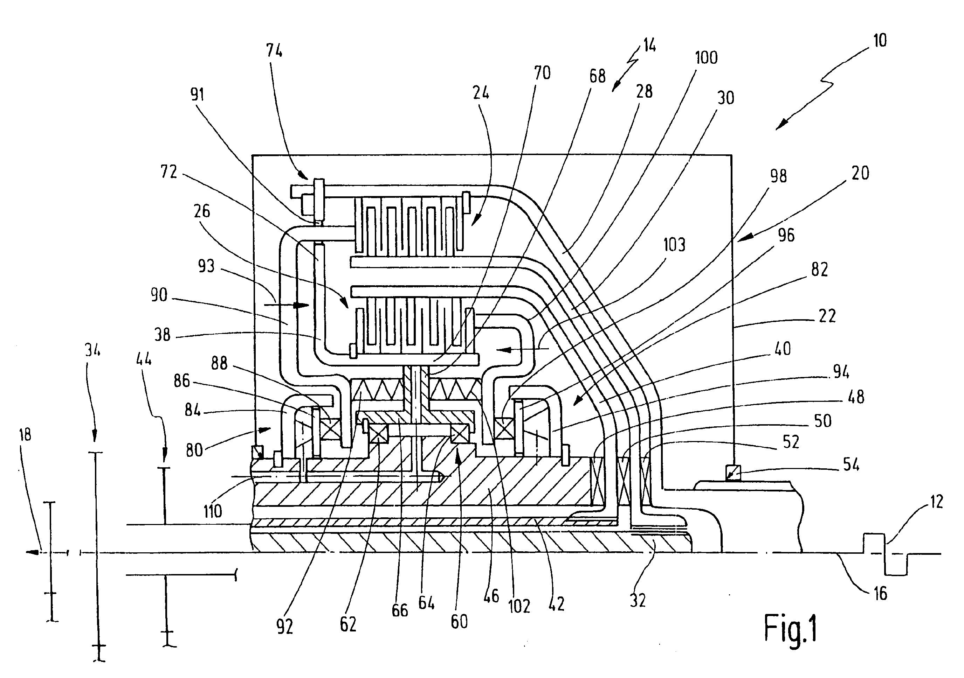

In Fig. 1 ist ein Antriebsstrang für ein Kraftfahrzeug generell mit 10 bezeichnet.

Der Antriebsstrang 10 weist einen Antriebsmotor, wie einen Verbrennungsmotor 12, und ein Doppelkupplungsgetriebe 14 auf. Der Eingang des Doppelkupplungsgetriebes 14 ist mit der Kurbelwelle 16 des Verbrennungsmotors 12 verbunden. Das Doppelkupplungsgetriebe 14 weist eine Ausgangswelle 18 auf, die in an sich bekannter Weise mit Antriebsrädern des Fahrzeugs verbunden werden kann.

Das Doppelkupplungsgetriebe 14 weist eine Doppelkupplungsanordnung 20 auf, die in einem Gehäuse 22 aufgenommen ist. Die Doppelkupplungsanordnung 20 beinhaltet eine erste Reibkupplung 24 und eine zweite Reibkupplung 26. Die zwei Reibkupplungen 24, 26 sind radial ineinander verschachtelt angeordnet, wobei die erste Reibkupplung 24 radial außen liegt.

Die erste Reibkupplung 24 weist ein erstes Eingangsglied 28 auf, das mit dem Eingang, d.h. der Kurbelwelle 16, verbunden ist. Das erste Eingangsglied 28 erstreckt sich nach der Art eines Korbes axial nach vorne. Die zwei Reibkupplungen 24, 26 sind radial innerhalb des ersten Eingangsgliedes 28 angeordnet.

Die erste Reibkupplung 24 weist ferner ein erstes Ausgangsglied 30 auf. Das erste Ausgangsglied 30 ist mit einer ersten Ausgangswelle 32 der Doppelkupplungsanordnung verbunden. Die erste Ausgangswelle 32 ist als Vollwelle ausgebildet und ist mit einem ersten Teilgetriebe 34 des Doppelkupplungsgetriebes 14 verbunden.

Das erste Ausgangsglied 30 ist ebenfalls nach der Art eines Gehäusekorbes ausgebildet und erstreckt sich radial innerhalb des ersten Eingangsgliedes 28, wobei die erste Reibkupplung 24 dazwischen aufgenommen ist.

Die zweite Reibkupplung 26 weist ein zweites Eingangsglied 38 auf. Das zweite Eingangsglied 38 ist drehfest mit dem ersten Eingangsglied 28 verbunden. Die zweite Reibkupplung 26 weist ferner ein zweites Ausgangsglied 40 auf. Das zweite Ausgangsglied 40 ist ebenfalls nach der Art eines Gehäusekorbes ausgebildet und erstreckt sich radial innerhalb des ersten Ausgangsgliedes 30. Das zweite Ausgangsglied 40 ist mit einer zweiten Ausgangswelle 42 verbunden, die als Hohlwelle konzentrisch zu der ersten Ausgangswelle 32 angeordnet ist. Die zweite Ausgangswelle 42 ist mit einem zweiten Teilgetriebe 44 des Doppelkupplungsgetriebes 14 verbunden.

Das erste Eingangsglied 28, das erste Ausgangsglied 30 und das zweite Ausgangsglied 40 erstrecken sich, wie oben erwähnt, nach der Art von Gehäusekörben ausgehend von dem Bereich der Kurbelwelle 16 in Richtung hin zu den Teilgetrieben 34, 44. Zum anderen weist die Doppelkupplungsanordnung 20 eine gehäusefeste Nabe 46 auf, die sich in axialer Richtung von dem Bereich der Teilgetriebe 34, 44 in Richtung hin zu dem Bereich der Kurbelwelle 16 erstreckt, d.h. radial in das korbförmige zweite Ausgangsglied 40 hinein. Die gehäusefeste Nabe 46 ist dabei koaxial zu den zwei Ausgangswellen 32, 42 angeordnet und umgibt diese.

Zwischen einer Stirnseite der gehäusefesten Nabe 46 und einem Radialabschnitt des zweiten Ausgangsgliedes 40 ist ein erstes Axiallager 48 angeordnet. Zwischen der Rückseite dieses radialen Abschnittes und einem radialen Abschnitt des ersten Ausgangsgliedes 30 ist ein zweites Axiallager 50 angeordnet. Zwischen der Rückseite des radialen Abschnittes des ersten Ausgangsgliedes 30 und einem radialen Abschnitt des ersten Eingangsgliedes 28 ist ein drittes Axiallager 52 angeordnet. Die Axiallager 48, 50, 52 sind in radialer Richtung etwa mit der gehäusefesten Nabe 46 ausgerichtet.

Zwischen dem Gehäuse 22 der Doppelkupplungsanordnung 20 und der Kurbelwelle 16 ist eine Wellendichtung 54 vorgesehen.

Das Gehäuse 22 ist auf der anderen axialen Seite mit der gehäusefesten Nabe 46 verbunden, so dass insgesamt ein abgeschlossener Raum gebildet ist. Nicht dargestellt sind gegebenenfalls vorgesehene Wellendichtungen zwischen der gehäusefesten Nabe 46 und der zweiten Ausgangswelle 42 bzw. zwischen der zweiten Ausgangswelle 42 und der ersten Ausgangswelle 32.

Das erste und das zweite Teilgetriebe 34, 44 sind nach der Art von Vorgelegegetrieben ausgebildet, wie es im Stand der Technik an sich bekannt ist. Das erste Teilgetriebe 34 beinhaltet beispielsweise gerade Gangstufen, und das zweite Teilgetriebe 44 beinhaltet beispielsweise ungerade Gangstufen.

Zur Lagerung des zweiten Eingangsgliedes 38, und damit mittelbar auch des ersten Eingangsgliedes 28, ist eine Radiallageranordnung 60 vorgesehen. Die Radiallageranordnung 60 weist ein erstes Radiallager 62 und ein axial hiervon beabstandet angeordnetes zweites Radiallager 64 auf, deren Innenringe mit der gehäusefesten Nabe 46 verbunden sind. Die zwei Radiallager 62, 64 lagern in radialer Richtung ein Drehglied 66, das einen radial nach außen vorstehenden Radialsteg 68 aufweist.

Obgleich die Radiallager 62, 64 im Wesentlichen Radialkräfte aufnehmen, ist das Drehglied 66 so an diesen festgelegt, dass das Drehglied 66 auch axial durch die Radiallager 62, 64 geführt ist.

Der Radialsteg 68 ist mit dem zweiten Eingangsglied 38 verbunden, genauer gesagt mit einem Axialglied 70 des zweiten Eingangsgliedes 38.

Das Axialglied 70 dient als Innenlamellenträger für die zweite Reibkupplung 26 und ist mit einem Radialglied 72 verbunden. Das Radialglied 72 erstreckt sich von dem axialen Ende benachbart zu den Teilgetrieben 34, 44 radial nach außen und ist über eine drehfeste Kopplung 74 mit einem axial vorstehenden Abschnitt des ersten Eingangsgliedes 28 verbunden. Dieser axial vorstehende Abschnitt des ersten Eingangsgliedes 28 dient als Außenlamellenträger für die erste Reibkupplung 24.

Ein axial vorstehender Abschnitt des ersten Ausgangsgliedes 30 dient als Innenlamellenträger für die erste Reibkupplung 24.

Radial benachbart hierzu dient ein sich axial erstreckender Abschnitt des zweiten Ausgangsgliedes 40 als Außenlamellenträger der zweiten Reibkupplung 26.

Zum Betätigen der zwei Reibkupplungen 24, 26 sind eine erste Kolben/Zylinderanordnung 80 und eine zweite Kolben/Zylinderanordnung 82 vorgesehen. Die Kolben/Zylinderanordnungen 80, 82 sind auf gegenüberliegenden Seiten der Radiallageranordnung 60 bzw. des Drehgliedes 66 angeordnet.

Die erste Kolben/Zylinderanordnung 80 weist einen ersten Zylinder 84 auf, der starr mit der gehäusefesten Nabe 46 verbunden ist. Die erste Kolben/Zylinderanordnung 80 weist ferner einen ersten Kolben 86 auf, der in axialer Richtung in dem ersten Zylinder 84 verschieblich gelagert ist. Ein hierdurch gebildeter Zylinderraum ist über eine nicht näher bezeichnete Radialbohrung mit einer Zuführleitung innerhalb der gehäusefesten Nabe 46 verbunden.

Die Außenseite des ersten Kolbens 86 ist über ein erstes Einrücklager 88 mit einer ersten Druckplatte 90 verbunden. Die erste Druckplatte 90 erstreckt sich radial nach außen und weist einen axialen Abschnitt auf, der dazu ausgelegt ist, die erste Reibkupplung 24 axial mit einer Kraft zu beaufschlagen. Die erste Druckplatte 90 dreht sich mit dem ersten und dem zweiten Eingangsglied 28, 38 mit. Die Differenzdrehzahl zu dem gehäusefesten ersten Kolben 86 wird von dem Einrücklager 88 aufgenommen, das als Axiallager ausgebildet ist.

Der axiale Abschnitt der ersten Druckplatte 90, der sich an die Lamellen der ersten Reibkupplung 24 anlegt, erstreckt sich durch eine Öffnung 91 in dem Radialglied 72 des zweiten Eingangsgliedes 38 hindurch. Bei einem konstruktiv realisierten Ausführungsbeispiel wird in der Regel eine Mehrzahl solcher Öffnungen 91 vorgesehen sein, die über den Umfang der ersten Druckplatte 90 verteilt angeordnet sind.

Auf der dem ersten Einrücklager 88 gegenüberliegenden Seite der ersten Druckplatte 90 ist eine erste Federanordnung 92 angeordnet. Die erste Federanordnung 92 stützt sich an dem Radialsteg 68 des Drehgliedes 66 ab und drückt die erste Druckplatte 90 in axialer Richtung von dem Radialsteg 68 weg, in Richtung hin zu den Teilgetrieben 34, 44. Zum Betätigen der ersten Reibkupplung 24 wird der ersten Kolben/Zylinderanordnung 80 Hydraulikfluid zugeführt, so dass der erste Kolben 86 in die entgegengesetzte Richtung bewegt wird und folglich über die erste Druckplatte 90 eine erste Axialkraft 93 auf die Lamellenpakete der ersten Reibkupplung 24 ausübt.

Die zweite Kolben/Zylinderanordnung 82 ist in entsprechender Weise etwa spiegelbildlich hierzu aufgebaut. Die erste und die zweite Kolben/Zylinderanordnung 80, 82 können folglich mit ähnlichen oder identischen Bauteilen realisiert werden, so dass sich eine hohe Modularität ergibt.

Die zweite Kolben/Zylinderanordnung 82 weist demzufolge einen zweiten Zylinder 94 auf, der fest mit der gehäusefesten Nabe 46 verbunden ist, und zwar im Wesentlichen benachbart zu dem zweiten Ausgangsglied 40.

Die zweite Kolben/Zylinderanordnung 82 weist ferner einen zweiten Kolben 96 auf, der über ein zweites Einrücklager 98 auf eine zweite Druckplatte 100 wirkt. Ein axialer Abschnitt der zweiten Druckplatte 100 liegt an den Lamellenpaketen der zweiten Reibkupplung 26 an. Die zweite Kolben/Zylinderanordnung 82 kann folglich eine zweite Axialkraft 103 auf die zweite Reibkupplung 26 ausüben, wobei die zweite Axialkraft 103 entgegengesetzt zu der ersten Axialkraft 93 ausgerichtet ist.

Zwischen dem Radialsteg 68 des Drehgliedes 66 und der zweiten Druckplatte 100 ist eine zweite Federanordnung 102 vorgesehen, die die zweite Druckplatte 100 in Richtung hin zu der Kurbelwelle 16 vorspannt, d.h. in Ausrückrichtung der zweiten Reibkupplung 26. Die Radiallager 60, 62 nehmen die Axialkräfte auf, die die Federanordnungen 92, 102 auf das Drehglied 68 ausüben.

Der Zylinderraum der zweiten Kolben/Zylinderanordnung 82 ist über nicht näher dargestellte Kanäle in der gehäusefesten Nabe 46 mit einer in Fig. 1 ebenfalls nicht näher dargestellten Hydraulikschaltung verbunden. In Fig. 1 ist jedoch dargestellt, dass in der gehäusefesten Nabe 46 auch Kanäle vorhanden sind, über die den Reibkupplungen 24, 26 Kühlfluid zugeführt werden kann.

Das Kühlfluid wird dabei über Kanäle in der gehäusefesten Nabe 46, einen Raum zwischen den zwei Radiallagern 62, 64 und Radialkanäle in dem Drehglied 66 und in den Reibkupplungen 24, 26 zugeführt. Es versteht sich, dass in den Eingangs- und Ausgangsgliedern 38, 30, 40 jeweils geeignete Radialöffnungen vorgesehen sind, um für eine geeignete Beströmung der Lamellen zu sorgen.

Die Radialkanäle in dem Drehglied 66 können sich dabei durch den Radialsteg 68 hindurch erstrecken.

Es versteht sich, dass bei dieser Ausführungsform die Radiallager 62, 64 vorzugsweise als abgedichtete Lager ausgebildet sind.

Während in Fig. 1 die Reibkupplungen 24, 26 als nass laufende Lamellenkupplungen dargestellt sind, versteht sich, dass der Aufbau der erfindungsgemäßen Doppelkupplungsanordnung 20 auch für trocken laufende Reibkupplungen verwendbar ist.

In diesem Fall könnte beispielsweise über Kanäle, die bei nass laufenden Kupplungen zur Kühlölzufuhr verwendet werden, Kühlluft zugeführt werden.

Insgesamt lässt sich so ein modulares System von Doppelkupplungsanordnungen aufbauen, die mit nass laufenden oder trocken laufenden Reibkupplungen ausgestattet sind. Der grundlegende Aufbau kann dabei für die eine wie die andere Variante verwendet werden.

Die Zufuhr von Hydraulikfluid zur Ansteuerung der Kolben/Zylinderanordnungen 80, 82 kann über die gehäusefeste Nabe 46 erfolgen, so dass keine Leckagen wie bei einer Drehdurchführung auftreten. Notwendige Leckagen für die Regelung können in der Hydraulikschaltung durch definierte Blenden realisiert werden.

Da sich aufgrund der feststehenden Kolben/Zylinderanordnungen weniger Bauteile mitdrehen, ergeben sich geringere Schleppmomente. Die Doppelkupplungsanordnung kann aufgrund der geringen Komplexität auch zu niedrigen Herstellkosten gefertigt werden. Ferner sind keine Fliehkraftausgleichsräume notwendig, da die Kolben/Zylinderanordnungen 80, 82 feststehend ausgebildet sind und sich nicht mitdrehen.

Der generelle Aufbau der Doppelkupplungsanordnung 20 mit der feststehenden Nabe 46 kann auch zum Betrieb einer mechanischen Pumpe oder sonstigen Aggregaten verwendet werden.

Die oben genannten Fluidkanäle in der gehäusefesten Nabe 46 sind in Fig. 1 aus Gründen einer übersichtlichen Darstellung pauschal mit 110 gekennzeichnet. Es versteht sich jedoch, dass diese Fluidkanäle unterschiedliche Fluidleitungen beinhalten können und radial über den Umfang der gehäusefesten Nabe 46 verteilt angeordnet sein können.

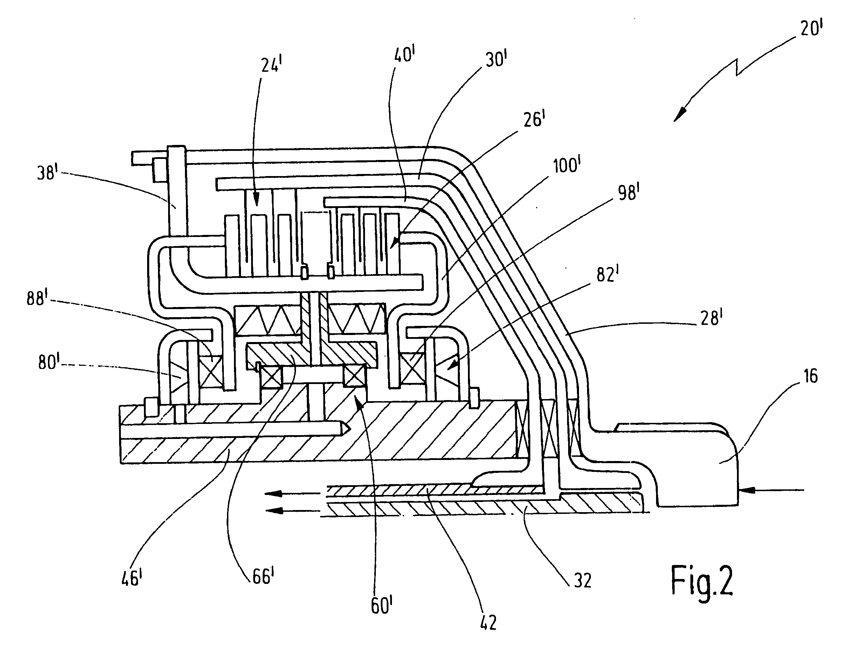

In Fig. 2 ist eine alternative Ausführungsform einer erfindungsgemäßen Doppelkupplungsanordnung 20' gezeigt.

Der generelle Aufbau und die generelle Funktionsweise entsprechen der Doppelkupplungsanordnung 20 der Fig. 1, so dass im Folgenden nur auf Unterschiede eingegangen wird.

Bei der Doppelkupplungsanordnung 20' sind die erste Reibkupplung 24' und die zweite Reibkupplung 26' in axialer Richtung nebeneinander angeordnet. Es kann hierdurch eine radial kompakte Bauweise erzielt werden.

Das erste Eingangsglied 28' ist mit dem zweiten Eingangsglied 38' drehfest verbunden. Das zweite Eingangsglied 38' dient im vorliegenden Fall als Innenlamellenträger sowohl der ersten Reibkupplung 24' als auch der zweiten Reibkupplung 26'.

Man erkennt, dass der Aufbau hinsichtlich der Kolben/Zylinderanordnungen 80', 82' identisch sein kann wie bei der Doppelkupplungsanordnung 20 der Fig. 1. Insofern kann die Modularität erhöht werden. Es kann mit dem gleichen Grundaufbau sowohl eine Doppelkupplungsanordnung 20 mit radial ineinander verschachtelten Reibkupplungen als auch eine solche mit axial nebeneinander angeordneten Reibkupplungen aufgebaut werden.

Dabei können viele Gleichteile realisiert werden, beispielsweise auch die zweite Druckplatte 100', das zweite Ausgangsglied 40' der zweiten Reibkupplung 26', etc.

## Patentansprüche

1. Doppelkupplungsanordnung (20) für ein Doppelkupplungsgetriebe (14), mit einer Eingangswelle (16), einer ersten Reibkupplung (24), einer zweiten Reibkupplung (26), zwei Ausgangswellen (32, 42), einem drehfesten Gehäuse (22), einer gehäusefesten Nabe (46), einer ersten gehäusefesten Kolben/Zylinderanordnung (80) und einer zweiten gehäusefesten Kolben/Zylinderanordnung (82), wobei Eingangsglieder (28, 38) der Reibkupplungen (24, 26) mit der Eingangswelle (16) verbunden sind, wobei Ausgangsglieder (30, 40) der Reibkupplungen (24, 26) jeweils mit einer der zwei Ausgangswellen (32, 42) verbunden sind, und wobei die Reibkupplungen (24, 26) jeweils mittels einer der gehäusefesten Kolben/Zylinderanordnungen (80, 82) und eines Axiallagers (88, 98) betätigbar sind, wobei
wenigstens eines der Eingangsglieder (28, 38) mittels einer Radiallageranordnung (60) an der gehäusefesten Nabe (46) drehbar gelagert ist, und wobei
wenigstens eines (38) der Eingangsglieder (28, 38) mit einem Drehglied (66) verbunden ist, das mittels der Radiallageranordnung (60) an der gehäusefesten Nabe (46) drehbar gelagert ist,
**dadurch gekennzeichnet, dass**
die erste und die zweite Kolben/Zylinderanordnung (80, 82) auf gegenüberliegenden Seiten der Radiallageranordnung (60) angeordnet sind.

2. Doppelkupplungsanordnung nach Anspruch 1, **dadurch gekennzeichnet, dass** die Radiallageranordnung (60) zwei axial voneinander beabstandete Radiallager (62, 64) aufweist.

3. Doppelkupplungsanordnung nach Anspruch 2, **dadurch gekennzeichnet, dass** die Radiallager (62, 64) abgedichtet sind, wobei ein Raum dazwischen zur Führung von Kühlfluid dient.

4. Doppelkupplungsanordnung nach einem der Ansprüche 1 bis 3, **dadurch gekennzeichnet, dass** die erste und die zweite Kolben/Zylinderanordnung (80, 82) in entgegengesetzte Richtungen (93, 103) wirken.

5. Doppelkupplungsanordnung nach einem der Ansprüche 1 bis 4, **dadurch gekennzeichnet, dass** die Kolben/Zylinderanordnungen (80, 82) unmittelbar am Außenumfang der gehäusefesten Nabe (46) gelagert sind.

6. Doppelkupplungsanordnung nach einem der Ansprüche 1 bis 5, **dadurch gekennzeichnet, dass** die Reibkupplungen (24, 26) jeweils durch eine Federanordnung (92, 102) in Öffnungsrichtung vorgespannt sind.

7. Doppelkupplungsanordnung nach Anspruch 6, **dadurch gekennzeichnet, dass** wenigstens eine der Federanordnungen (92, 102) sich an einem Drehglied (66) abstützt, das mittels der Radiallageranordnung (60) an der gehäusefesten Nabe (46) drehbar gelagert ist.

8. Doppelkupplungsanordnung nach einem der Ansprüche 1 bis 7, **dadurch gekennzeichnet, dass** die zweite Reibkupplung (26) radial innerhalb der ersten Reibkupplung (24) angeordnet ist.

9. Doppelkupplungsanordnung nach Anspruch 8, **dadurch gekennzeichnet, dass** das Eingangsglied (28) der ersten Reibkupplung (24) einen radial außen angeordneten Lamellenträger (28) aufweist.

10. Doppelkupplungsanordnung nach Anspruch 8 oder 9, **dadurch gekennzeichnet, dass** das Eingangsglied (38) der zweiten Reibkupplung (26) einen radial innen angeordneten Lamellenträger (38) aufweist.

11. Doppelkupplungsanordnung nach einem der Ansprüche 1 bis 7, **dadurch gekennzeichnet, dass** die zweite Reibkupplung (26') axial benachbart zu der ersten Reibkupplung (24') angeordnet ist.

12. Doppelkupplungsanordnung nach Anspruch 11, **dadurch gekennzeichnet, dass** das Eingangsglied (28', 38') der ersten Reibkupplung (24') einen radial innen angeordneten Lamellenträger (38') aufweist.

13. Doppelkupplungsanordnung nach Anspruch 11 oder 12, **dadurch gekennzeichnet, dass** das Eingangsglied (28', 38') der zweiten Reibkupplung (26') einen radial innen angeordneten Lamellenträger (38') aufweist.

14. Doppelkupplungsanordnung nach einem der Ansprüche 11 bis 13, **dadurch gekennzeichnet, dass** ein mittels der Radiallageranordnung (60) an der Nabe (46) gelagertes Drehglied (66) mit einem gemeinsamen Eingangsglied (38') der ersten und der zweiten Reibkupplung (24', 26') verbunden ist.

## Claims

1. Dual clutch arrangement (20) for a dual clutch transmission (14), having an input shaft (16), a first friction clutch (24), a second friction clutch (26), two output shafts (32, 42), a rotationally fixed housing (22), a hub (46) which is fixed to the housing, a first piston/cylinder arrangement (80) which is fixed to the housing, and a second piston/cylinder arrangement (82) which is fixed to the housing, with input members (28, 38) of the friction clutches (24, 26) being connected to the input shaft (16), with output members (30, 40) of the friction clutches (24, 26) in each case being connected to one of the two output shafts (32, 42), and with it being possible for the friction clutches (24, 26) to be actuated in each case by means of one of the piston/cylinder arrangements (80, 82), which are fixed to the housing, and an axial bearing (88, 98), at least one of the input members (28, 38) being rotatably mounted by means of a radial bearing arrangement (60) on the hub (46) which is fixed to the housing, and at least one (38) of the input members (28, 38) being connected to a rotary member (66) which is rotatably mounted by means of the radial bearing arrangement (60) on the hub (46) which is fixed to the housing (46),
**characterized in that**
the first and second piston/cylinder arrangements (80, 82) are arranged on opposite sides of the radial bearing arrangement (60).

2. Dual clutch arrangement according to Claim 1, **characterized in that** the radial bearing arrangement (60) has two radial bearings (62, 64) which are spaced apart from one another axially.

3. Dual clutch arrangement according to Claim 2, **characterized in that** the radial bearings (62, 64) are sealed off, with a space in between serving to guide cooling fluid.

4. Dual clutch arrangement according to one of Claims 1 to 3, **characterized in that** the first and second piston/cylinder arrangements (80, 82) act in opposite directions (93, 103).

5. Dual clutch arrangement according to one of Claims 1 to 4, **characterized in that** the piston/cylinder arrangements (80, 82) are mounted directly on the outer periphery of the hub (46) which is fixed to the housing.

6. Dual clutch arrangement according to one of Claims 1 to 5, **characterized in that** the friction clutches (24, 26) are in each case pre-loaded in the opening direction by means of a spring arrangement (92, 102).

7. Dual clutch arrangement according to Claim 6, **characterized in that** at least one of the spring arrangements (92, 102) is supported on a rotary member (66) which is rotatably mounted by means of the radial bearing arrangement (60) on the hub (46) which is fixed to the housing.

8. Dual clutch arrangement according to one of Claims 1 to 7, **characterized in that** the second friction clutch (26) is arranged radially within the first friction clutch (24).

9. Dual clutch arrangement according to Claim 8, **characterized in that** the input member (28) of the first friction clutch (24) has a radially outwardly arranged plate carrier (28).

10. Dual clutch arrangement according to Claim 8 or 9, **characterized in that** the input member (38) of the second friction clutch (26) has a radially inwardly arranged plate carrier (38).

11. Dual clutch arrangement according to one of Claims 1 to 7, **characterized in that** the second friction clutch (26') is arranged axially adjacent to the first friction clutch (24').

12. Dual clutch arrangement according to Claim 11, **characterized in that** the input member (28', 38') of the first friction clutch (24') has a radially inwardly arranged plate carrier (38').

13. Dual clutch arrangement according to Claim 11 or 12, **characterized in that** the input member (28', 38') of the second friction clutch (26') has a radially inwardly arranged plate carrier (38').

14. Dual clutch arrangement according to one of Claims 11 to 13, **characterized in that** a rotary member (66) which is mounted by means of the radial bearing arrangement (60) on the hub (46) is connected to a common input member (38') of the first and second friction clutches (24', 26').

## Revendications

1. Dispositif (20) à double embrayage pour une transmission (14) à double embrayage, comprenant un arbre d'entrée (16), un premier accouplement par frottement (24), un second accouplement par frottement (26), deux arbres de sortie (32, 42), un carter (22) à verrouillage rotatif, un moyeu (46) assujetti au carter, un premier vérin (80) assujetti au carter et un second vérin (82) assujetti audit carter, des organes d'entrée (28, 38) des accouplements par frottement (24, 26) étant reliés à l'arbre d'entrée (16), des organes de sortie (30, 40) desdits accouplements par frottement (24, 26) étant respectivement reliés à l'un des deux arbres de sortie (32, 42), et lesdits accouplements par frottement (24, 26) pouvant être respectivement actionnés au moyen de l'un des vérins (80, 82) assujettis au carter, et d'un palier axial (88, 98), sachant
qu'au moins l'un des organes d'entrée (28, 38) est monté à rotation, sur le moyeu (46) assujetti au carter, au moyen d'un ensemble (60) de portée radiale, et sachant
qu'au moins l'un (38) desdits organes d'entrée (28, 38) est relié à un organe rotatif (66) monté à rotation, sur ledit moyeu (46) assujetti audit carter, au moyen dudit ensemble (60) de portée radiale,
**caractérisé par le fait que**
les premier et second vérins (80, 82) sont placés sur des côtés mutuellement opposés de l'ensemble (60) de portée radiale.

2. Dispositif à double embrayage selon la revendication 1, **caractérisé par le fait que** l'ensemble (60) de portée radiale présente deux paliers radiaux (62, 64) distants l'un de l'autre dans le sens axial.

3. Dispositif à double embrayage selon la revendication 2, **caractérisé par le fait que** les paliers radiaux (62, 64) sont rendus étanches, un espace, situé entre eux, servant à charrier du fluide de refroidissement.

4. Dispositif à double embrayage selon l'une des revendications 1 à 3, **caractérisé par le fait que** les premier et second vérins (80, 82) agissent dans des directions opposées (93, 103).

5. Dispositif à double embrayage selon l'une des revendications 1 à 4, **caractérisé par le fait que** les vérins (80, 82) sont montés directement sur le pourtour extérieur du moyeu (46) assujetti au carter.

6. Dispositif à double embrayage selon l'une des revendications 1 à 5, **caractérisé par le fait que** les accouplements par frottement (24, 26) sont respectivement précontraints, dans le sens de l'ouverture, par l'intermédiaire d'un ensemble à ressorts (92, 102).

7. Dispositif à double embrayage selon la revendication 6, **caractérisé par le fait qu'**au moins l'un des ensembles à ressorts (92, 102) est en appui contre un organe rotatif (66) monté à rotation, sur le moyeu (46) assujetti au carter, au moyen de l'ensemble (60) de portée radiale.

8. Dispositif à double embrayage selon l'une des revendications 1 à 7, **caractérisé par le fait que** le second accouplement par frottement (26) occupe une position radiale à l'intérieur du premier accouplement par frottement (24).

9. Dispositif à double embrayage selon la revendication 8, **caractérisé par le fait que** l'organe d'entrée (28) du premier accouplement par frottement (24) présente un porte-lamelles (28) occupant une position radialement extérieure.

10. Dispositif à double embrayage selon la revendication 8 ou 9, **caractérisé par le fait que** l'organe d'entrée (38) du second accouplement par frottement (26) présente un porte-lamelles (38) occupant une position radialement intérieure.

11. Dispositif à double embrayage selon l'une des revendications 1 à 7, **caractérisé par le fait que** le second accouplement par frottement (26') est placé axialement au voisinage du premier accouplement par frottement (24').

12. Dispositif à double embrayage selon la revendication 11, **caractérisé par le fait que** l'organe d'entrée (28', 38') du premier accouplement par frottement (24') présente un porte-lamelles (38') occupant une position radialement intérieure.

13. Dispositif à double embrayage selon la revendication 11 ou 12, **caractérisé par le fait que** l'organe d'entrée (28', 38') du second accouplement par frottement (26') présente un porte-lamelles (38') occupant une position radialement intérieure.

14. Dispositif à double embrayage selon l'une des revendications 11 à 13, **caractérisé par le fait qu'**un organe rotatif (66), monté sur le moyeu (46) au moyen de l'ensemble (60) de portée radiale, est relié à un organe d'entrée (38') commun aux premier et second accouplements par frottement (24', 26').
